# EUROPÄISCHE PATENTSCHRIFT

(11) **EP 3 412 388 B1**
(45) Veröffentlichungstag und Bekanntmachung des Hinweises auf die Patenterteilung: **30.10.2019**
(21) Anmeldenummer: 17174759.5
(22) Anmeldetag: 07.06.2017
(51) Int. Cl.: B23B 31/40

(54) **INNENSPANNMITTEL MIT GESICHERTEM SPANNSEGMENTRING**
INTERNAL CLAMPING MEANS WITH SECURE CLAMPING SEGMENT RING
MOYEN DE SERRAGE INTERNE COMPRENANT UN ANNEAU DE SEGMENT DE SERRAGE

(43) Veröffentlichungstag der Anmeldung: 12.12.2018
(73) Patentinhaber: Hainbuch GmbH Spannende Technik, 71672 Marbach (DE)
(72) Erfinder: Buschmann, Heiko, 74321 Bietigheim-Bissingen (DE)
(74) Vertreter: Patentanwaltskanzlei Cartagena

(56) Entgegenhaltungen:
- WO-A1-2005/063426
- FR-A1- 2 297 107

## Beschreibung

### ANWENDUNGSGEBIET UND STAND DER TECHNIK

Die Erfindung betrifft ein Spannmittel in Art eines Innenspannmittels nach dem Oberbegriff von Anspruch 1 zum Festlegen von Werkstücken, insbesondere zum Zwecke der Rotationsbearbeitung dieser Werkstücke. Ein solches Spannmittel ist aus WO 2005/063426 A bekannt.

Ein solches gattungsgemäßes Spannmittel verfügt über zueinander bewegliche Spannflächen, die an unterschiedlichen Spannsegmenten vorgesehen sind und dadurch in einer radialen Aufweitungsrichtung gegeneinander beweglich sind. Durch eine Verlagerung eines Spannsegmentrings, der die einzelnen Spannsegmente umfasst, entlang einer konischen Fläche wird der Spannsegmentring aufgeweitet, so dass die außenseitig an den Spannsegmenten vorgesehenen Spannflächen in einer vorzugsweise zylindrischen Ausnehmung des Werkstücks in Kontakt mit den Einspannflächen des Werkstücks kommen. Im gespannten Zustand ist dann eine Bearbeitung des Werkstücks möglich, wobei es insbesondere um eine Bearbeitung des Werkstücks im rotierenden Zustand geht.

Die Spannsegmente, die gemeinsam Teil des Spannsegmentrings sind, sind üblicherweise miteinander verbunden, insbesondere durch in Umfangsrichtung gegeneinander beabstandete Verbindungsabschnitte aus einem elastischen Material.

Problematisch ist, dass im Falle von Materialermüdung, insbesondere im Bereich der genannten Verbindungsabschnitte, die Gefahr besteht, dass unter dem Einfluss der Fliehkräfte der Spannsegmentring versagt und die einzelnen Spannsegmente sich unkontrolliert und mit hoher Geschwindigkeit vom Spannmittel lösen. Diese Gefahr besteht insbesondere dann, wenn das Spannmittel noch ohne hiermit gespanntes Werkstücke in Rotation versetzt wird, insbesondere im Zuge des Einrichtens.

Es ist bereits bekannt, zur Verhinderung dessen auf den gehäuseseitigen Spannkonus zunächst einen umlaufenden metallischen Ring aufzuschieben, der bezogen auf eine Radialrichtung formschlüssig in Eingriff mit den einzelnen Spannsegmenten steht, so dass er im Falle des Versagens des Spannsegmentrings wirksam verhindert, dass die Spannsegmente vom Spannmittel weggeschleudert werden.

Nachteilig an dieser Lösung ist jedoch der erhöhte Rüstaufwand, der durch das Anbringen des genannten Rings verursacht wird. Schwerer noch wiegt, dass der Spannkonus zur Aufnahme des zusätzlichen Rings eine größere Länge aufweisen muss, wodurch wiederum ein höheres Maß an Biegeverformung im Betrieb verursacht wird. Folge ist eine geringere Bearbeitungspräzision.

Die Aufgabe der Erfindung besteht darin, ein Spannmittel gattungsgemäßer Art dahingehend weiterzubilden, dass dieses ohne Inkaufnahme einer verringerten Präzision bei der Bearbeitung eine wirksame Sicherung des Spannsegmentrings gegen ein Wegschleudern einzelner Spannsegmente bietet.

### AUFGABE UND LÖSUNG

Die Aufgabe wird durch ein Spannmittel gemäß Anspruch 1 gelöst.

Ein solches Spannmittel ist in Art eines Innenspannmittels ausgebildet und zum Festlegen von Werkstücken, insbesondere zum Zwecke der Rotationsbearbeitung dieser Werkstücke, vorgehen.

Das Spannmittel verfügt über ein in Axialrichtung erstrecktes Gehäuse, welches seinerseits über einen sich zu einem distalen Ende verjüngenden Spannkegel verfügt, der in Axialrichtung ausgerichtet ist.

Das Spannmittel verfügt weiterhin über einen Spannsegmentring mit einer Mehrzahl von Spannsegmenten, die in Radialrichtung gegeneinander beweglich sind. Diese Spannsegmente weisen an ihrer Außenseite eine Spannfläche zur Anlage am Werkstück und an ihrer Innenseite eine schräggestellte Gleitfläche zur Anlage am Spannkegel auf. Die Spannsegmente sind durch gemeinsame axiale Verlagerung gegenüber dem Spannkegel gegeneinander radial verlagerbar. Der Spannsegmentring verfügt mindestens über zwei Spannsegmente. Bevorzugt werden Gestaltungen mit mehr als zwei Spannsegmenten, insbesondere mit 3, 4 oder 6 Spannsegmenten.

Das Spannmittel verfügt über mindestens einen Auswerferstift, der in einer Durchbrechung des Gehäuses aufgenommen ist und in Axialrichtung gegenüber dem Gehäuse beweglich ist, um hierdurch den Spannsegmentring mit einer Kraft zum Trennen vom Spannkegel zu beaufschlagen.

An einer proximalen Stirnseite mindestens eines Spannsegments ist ein Kontaktbereich zur Aufnahme oder Anlage eines distalen Endes des Auswerferstiftes vorgesehen. Dieser Kontaktbereich und das distale Ende des Auswerferstiftes sind derart ausgebildet, dass bei Anordnung des distalen Endes des Auswerferstiftes im Kontaktbereich des Spannsegments der Auswerferstift in formschlüssiger Weise eine Beweglichkeit des Spannsegments in Radialrichtung nach außen begrenzt.

Bei einer erfindungsgemäßen Gestaltung ist somit vorgesehen, dass eine bezogen auf eine Radialrichtung formschlüssige Sicherung mindestens eines Spannsegments des Spannsegmentrings und insbesondere vorzugsweise mehrerer oder aller Spannsegmente des Spannsegmentrings mittels mindestens eines Auswerferstiftes erfolgt, deren Primärzweck darin liegt, durch axiale Verlagerung den Spannsegmentring zum Zwecke des Abnehmens gegen die Selbsthemmung vom Spannkegel herunterzuschieben. Vorzugsweise ist eine Mehrzahl von Auswerferstiften vorgesehen, die zur Aufnahme oder Anlage in Kontaktbereichen mehrerer Spannsegmente vorgesehen sind. Insbesondere vorzugsweise ist jedem Spannsegment ist mindestens ein eigener Auswerferstift zugeordnet.

Das distale Ende des mindestens einen Auswerferstiftes und die in Richtung der Auswerferstifte weisende proximale Stirnseite des Spannsegmentrings sind zu diesem Zweck derart ausgebildet, dass sie bezogen auf eine Radialrichtung derart einen Hinterschnitt bilden, dass eine unmittelbar in Radialrichtung wirkende Trennung des Spannsegments vom Auswerferstift verhindert wird.

Da anders als beim eingangs genannten Stand der Technik keine bezogen auf die Axialrichtung verlängernd wirkenden Zwischensegmente zwischen den Auswerferstiften einerseits und den Spannsegmenten andererseits vorgesehen sind, kann eine vergleichsweise kurze Baulänge des Spannkonus erzielt werden, die eine hohe Bearbeitungspräzision gestattet.

Bei einer besonders einfachen Gestaltung wirken das distale Ende des Auswerferstiftes und der Kontaktbereich am Spannsegment lediglich in Radialrichtung formschlüssig miteinander, um das genannte unkontrollierte Wegschleudern eines Spannsegments wirksam zu verhindern.

Bei einer bevorzugten Gestaltung ist allerdings vorgesehen, dass der Kontaktbereich am Spannsegment und das distale Ende des Auswerferstiftes derart ausgebildet sind, dass bei Anordnung des distalen Endes des Auswerferstiftes im Kontaktbereich der Auswerferstift in formschlüssiger Weise zusätzlich eine rotative Beweglichkeit des Spannsegments gegenüber dem Spannkegel begrenzt.

Bei dieser Gestaltung ist somit vorgesehen, dass das distale Ende des Auswerferstiftes und der Kontaktbereich einen Formschluss bewirken, der nicht nur eine radiale Bewegung der Spannsegmente nach außen begrenzt, sondern auch eine Drehbewegung des Spannsegmentrings relativ zum Spannkonus. Hierdurch wird zum einen verhindert, dass sich der Spannsegmentring im Betrieb rotativ gegenüber dem Spannkonus verlagert. Weiterhin können der oder die Kontaktbereiche am Spannsegmentring und der oder die Auswerferstifte einer solchen auch rotativ formschlüssigen Art des Zusammenwirkens auch eine oder mehrere Drehstellungen definieren, in denen der Spannsegmentring auf den Spannkonus aufschiebbar ist.

Der Kontaktbereich, im Bereich dessen das distale Ende des Auswerferstiftes mindestens radial sichernd mit dem Spannsegment zusammenwirkt, sollte derart ausgebildet sein, dass die bestimmungsgemäß erforderliche radiale Verlagerung der Spannsegmente zueinander zum Zwecke des Spannens und Entspannens möglich bleibt. Das distale Ende des Auswerferstiftes und der Kontaktbereich am Spannsegment sollten zu diesem Zweck begrenztes radiales Spiel ermöglichen.

Vorzugsweise ist der mindestens eine Kontaktbereich am Spannsegment durch eine in das Spannsegment eingebrachte Vertiefung gebildet. Das genannte radiale Spiel ist im Falle einer solchen Gestaltung dadurch realisierbar, dass die Vertiefung in Art einer radial erstreckten Nut ausgebildet ist.

Die Gestaltung mit einer in das Spannsegment eingebrachten Vertiefung stellt einen sehr einfachen Weg zur Erzielung des gewünschten Formschlusses dar. Statt am Spannsegment ergänzende Bauteile zur Bildung des Kontaktbereichs vorzusehen, wird bei der Ausgestaltung mit Vertiefung lediglich stirnseitig in das Spannsegment die genannte Vertiefung eingebracht, wobei diese Vertiefung sich zumindest auf der Innenseite des Spannsegmentrings nicht bis zur dort angeordneten Gleitfläche erstreckt, sondern zumindest einen Steg unangetastet lässt, der den Formschluss bewirkt.

Die Vertiefung ist vorzugsweise in Richtung der außenliegenden Spannfläche offen ausgebildet. Auf der Außenseite ist eine solche offene Ausgestaltung der Vertiefung im Hinblick auf die Funktionalität der radial formschlüssigen Sicherung unkritisch. Zudem gestattet es diese offene Ausgestaltung, dass das distale Ende des Auswerferstiftes je nach radialer Aufweitung des Spannsegmentrings hier radial nach außen aus der Vertiefung herausragt. Dies gestattet es, trotz vergleichsweise in Radialrichtung dünnwandiger Spannsegmente Auswerferstifte mit einem vergleichsweise großen Durchmesser zu wählen.

Der Spannkegel weist bei einer bevorzugten Gestaltung eine Pyramidenstumpfform mit mindestens 3, vorzugsweise mit 6 gegeneinander angestellten Spannkegelsegmenten auf. Weiterhin ist vorzugsweise vorgesehen, dass die Innenseiten der Spannsegmente gemeinsam im Querschnitt eine Polygonform mit geradlinigen Kanten bilden, wobei die Kontaktbereiche der Spannsegmente in Radialrichtung jeweils mit einem Mittelpunkt einer solchen Kante fluchten.

Wenngleich die Erfindung grundsätzlich auch bei rotationssymmetrischen Spannkegeln verwendbar ist, ist die Verwendung eines pyramidenstumpfförmigen Spannkegels dennoch von Vorteil, da hierdurch die Dicke der Spannsegmente in Radialrichtung üblicherweise nicht in Umfangsrichtung gleichbleibend ist. Da die Außenflächen des Spannsegmentrings, die als Spannflächen agieren, üblicherweise eine etwa kreisförmige bzw. zylindrische Fläche bilden, kann durch die hexagonale Gestaltung des Innenquerschnitts für die Kontaktbereiche auf dickere Bereiche des Spannsegments zurückgegriffen werden, nämlich fluchtend mit den genannten Mittelpunkten der Kanten.

Vorzugsweise ist an einer Mehrzahl von Spannsegmenten jeweils mindestens ein Kontaktbereich zur Aufnahme des distalen Endes jeweils eines Auswerferstiftes vorgesehen, und die Kontaktbereiche sind zueinander in einer Art angeordnet, dass nur in einer Drehstellung des Spannsegmentrings zum Spannkegel ein Einrücken der distalen Enden der Auswerferstifte möglich ist.

Bei einer solchen Gestaltung erfüllen die Auswerferstifte neben ihrer Hauptfunktion des Herunterdrückens des Spannsegmentrings vom Spannkegel und ihrer oben beschriebenen zusätzlichen Funktion einer radialen formschlüssigen Sicherung der Spannsegmente eine dritte Funktion, nämlich die Vorgabe einer einzigen möglichen Drehstellung des Spannsegmentrings relativ zum Spannkegel, in der ein Einrücken aller Auswerferstifte in die entsprechenden Kontaktbereiche der Spannsegmente möglich ist. Erzielt wird dies insbesondere dadurch, dass die Auswerferstifte einerseits und die Kontaktbereiche andererseits in Umfangsrichtung jeweils unterschiedlich zueinander beabstandet sind. Im Falle einer Gestaltung mit drei Auswerferstiften und drei Kontaktbereichen könnten diese beispielsweise in Umfangsrichtung um 70°, 122° und 168° voneinander beabstandet sein. Hierdurch wird der gewünschte Zweck nur einer möglichen Eingriffsdrehstellung wirksam erzielt. Von Vorteil ist eine solche definierte Relativdrehstellung zur Erzielung einer möglichst hohen Reproduzierbarkeit der Bearbeitung zwischen verschiedenen Werkstücken.

Wenngleich ein erfindungsgemäßes Spannmittel vorzugsweise bei der rotierenden Bearbeitung Verwendung findet, ist der Vorteil der durch Auswerferstifte definierten Drehstellung zum Aufsetzen des Spannsegmentrings auch gegeben, wenn das Spannmittel nicht rotiert und im Rahmen einer nichtrotierenden Bearbeitung eingesetzt wird.

Zur Kraftbeaufschlagung der Spannsegmente kann ein Zugbolzen vorgesehen sein, der in einem den Spannkegel in Axialrichtung durchdringenden Zugbolzenkanal geführt ist und der eine Anpressfläche zur Kraftbeaufschlagung der Spannsegmente in proximale Richtung aufweist.

Dabei ist vorzugsweise vorgesehen, dass der Zugbolzen und eine distale Stirnseite des Spannsegmentrings miteinander zur radial formschlüssigen Sicherung der Spannsegmente ausgebildet sind. Bei dieser Gestaltung ist somit vorgesehen, dass der zentrische Zugbolzen und der mindestens eine exzentrisch angeordnete Auswerferstift axial miteinander gekoppelt sind und somit, nachdem der Zugbolzen bei bereits aufgeschobenem Spannsegmentring angebracht wurde, stets in Axialrichtung gemeinsam verlagert werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Spannmittel in perspektivischer Darstellung mit angebrachtem Spannsegmentring.
Fig. 2 zeigt das Spannmittel der Fig. 1 bei abgenommenem Spannsegmentring.
Fig. 3 und 4 zeigen den Spannsegmentring in separater Darstellung aus zwei unterschiedlichen Perspektiven.
Fig. 5 zeigt das erfindungsgemäße Spannmittel in geschnittener Darstellung.

### DETAILLIERTE BESCHREIBUNG DER AUSFÜHRUNGSBEISPIELE

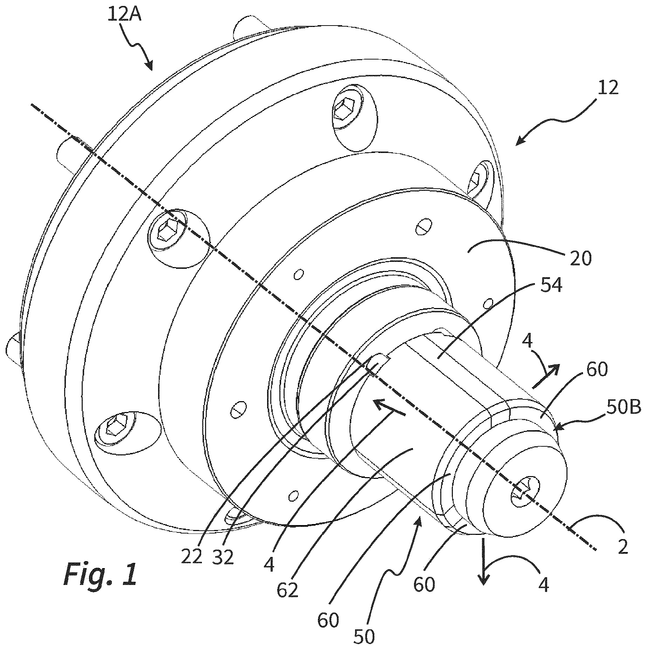

Fig. 1 zeigt ein exemplarisches Ausführungsbeispiel eines erfindungsgemäßen Spannmittels 12 in einer perspektivischen Darstellung. Das Spannmittel 12 ist dafür vorgesehen, mit seiner proximalen Stirnseite 12A an einer in den Figuren nicht dargestellten Werkstückspindel einer Bearbeitungsmaschine angebracht zu werden. Während der Bearbeitung rotiert das Spannmittel 12 mit allen in den Figuren dargestellten Teilen somit um die durch das Bezugszeichen 2 gekennzeichnete Axialrichtungs-Achse.

Am distalen Ende des Spannmittels 12 ist ein bestimmungsgemäß wechselbarer Spannsegmentring 50 vorgesehen, der insgesamt drei Spannsegmente 60 aufweist, die miteinander durch elastisch verformbare Verbindungselemente 54 verbunden sind. Die drei Spannsegmente 60 können somit in Radialrichtung 4 gegeneinander verlagert werden. An der Außenseite der Spannsegmente 60 sind Spannflächen 62 vorgesehen, die durch die genannte Aufweitung, die im Weiteren noch erläutert wird, in Kontakt mit einer zylindrischen Innenfläche eines Werkstücks gelangen und dieses daher festspannen können. In einer im Weiteren noch näher erläuterten Weise sind die Spannsegmente 60 gegen eine Trennung in Radialrichtung 4 vom Gehäuse 20 gesichert, nämlich an der distalen Stirnseite 50B mittels eines Zugbolzens 34 und am gegenüberliegenden proximalen Ende mittels Auswerferstiften 32, wie im Weiteren noch erläutert wird.

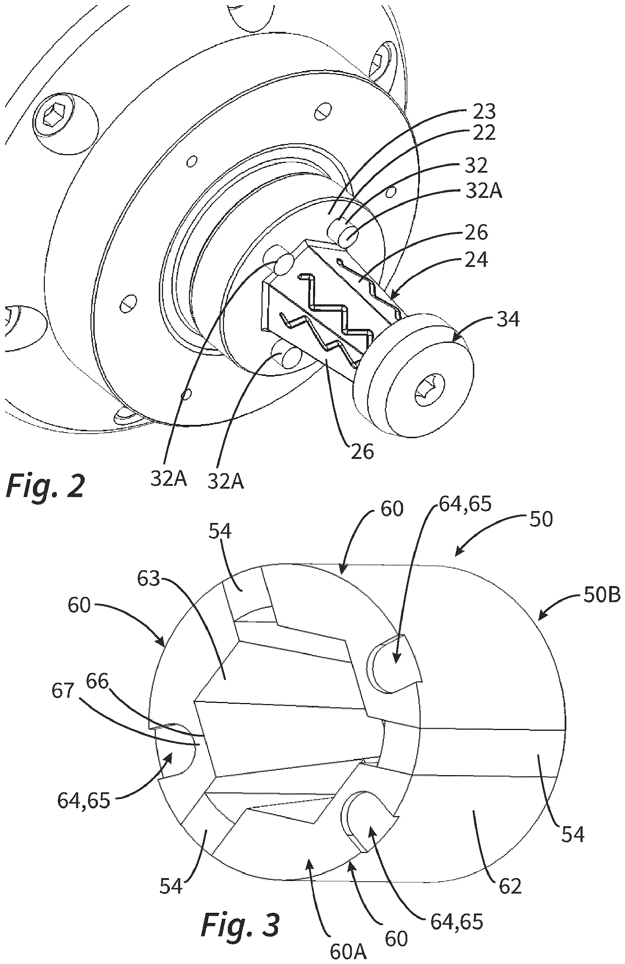

Zur Erläuterung dessen wird auf die Fig. 2 und 3 verwiesen.

Fig. 2 zeigt das Spannmittel 12 der Fig. 1 bei abgenommenem Spannsegmentring 50. Es ist zu erkennen, dass der hier ausgeblendete Spannsegmentring 50 einen als sechsseitigen Pyramidenstumpf ausgebildeten Spannkegel 24 umgibt, dessen Spannkegelsegmente 26 derart schräggestellt sind, dass sich der Spannkegel 24 in Richtung seines distalen Endes verjüngt. Am proximalen Ende des Spannkegels 24 ist dieser durch eine Anlagefläche 23 umgeben, im Bereich derer drei Durchbrechungen 22 vorgesehen sind, in die drei Auswerferstifte 32 eingesetzt sind, so dass sie sich bereits im Betrieb über die Anlagefläche 23 erheben. Wie anhand der Fig. 2 bereits erahnt werden kann, sind die Auswerferstifte 32 nicht in Umfangsrichtung äquidistant zueinander angeordnet, sondern schließen Winkel von 168°, 122° und 70° ein.

Fig. 3 zeigt die proximale Stirnseite 60A der drei Spannsegmente 60. Es ist zu erkennen, dass korrespondierend zu dem sechsseitigen Pyramidenstumpf des Spannkegels 24 Gleitflächen 63 an der Innenseite der Spannsegmente 60 vorgesehen sind, die ebenso wie die Spannkegelsegmente 26 schräggestellt sind. Hierdurch wird erreicht, dass eine axiale Verlagerung des Spannsegmentrings 50 der Fig. 3 auf den Spannkegel 24 der Fig. 2 in proximaler Richtung eine radiale Aufweitung des Spannsegmentrings 50 und damit eine Vergrößerung der Beabstandung der Spannflächen 62 zum Zwecke des Spannens ermöglicht.

Aus Fig. 3 sind auch die drei Kontaktbereiche 64 zu ersehen, die bestimmungsgemäß mit den distalen Enden 32a der Auswerferstifte 32 zusammenwirken. Diese Kontaktbereiche 64 sind bei der hier beschriebenen Ausgestaltung durch eingefräste taschenartige Vertiefungen 65 gebildet, die zu den Spannflächen 62 hin offen sind, zum Innenbereich des Spannsegmentrings 50 jedoch durch Stege 67 getrennt sind. Diese Stege 67 bewirken den bestimmungsgemäß beabsichtigten radialen Formschluss.

Sofern die distalen Enden 32a in den Vertiefungen 65 angeordnet sind, ist ein rein radiales Wegschleudern einzelner Spannsegmente 60 nicht mehr zu befürchten. Die Vertiefungen 65 sind dabei ausreichend groß, um trotz bestimmungsgemäßer radialer Verlagerung der Spannsegmente 60 gegenüber den Auswerferstiften 32 eine begrenzte radiale Relativbewegung zu gestatten.

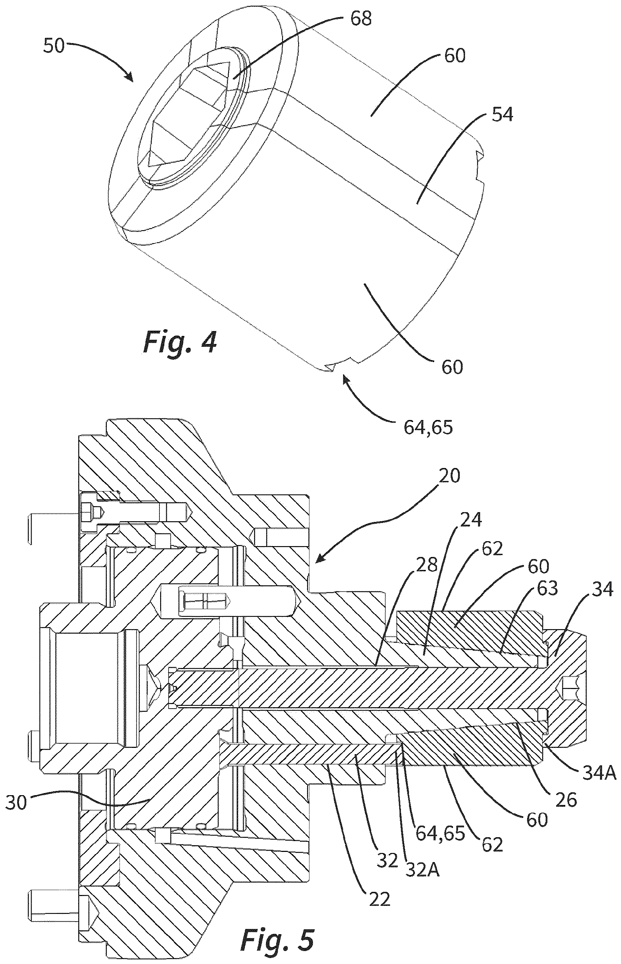

Fig. 4 zeigt den Spannsegmentring 50 von seiner distalen Stirnseite 50B aus. Hier ist zu erkennen, dass die Spannsegmente 60 auf dieser Seite über einen Steg 68 verfügen, dessen Bedeutung im Weiteren erläutert wird.

Aus Fig. 5 ist der Eingriff der Auswerferstifte 32 mit ihren distalen Enden 32a in die Vertiefungen 65 gut erkennbar. Ebenfalls ist aus Fig. 4 gut erkennbar, dass durch die genannten Stege 68 auch auf der distalen Stirnseite 50B des Spannsegmentrings 50 Formschluss hergestellt wird, nämlich durch einen am Zugbolzen 34 vorgesehenen umlaufenden Steg 34A, der die korrespondierenden Stege 68 an den Spannsegmenten 60 unter Bildung eines radialen Formschlusses übergreift.

Die erfindungsgemäße Gestaltung ist baulich extrem einfach, da das Vorsehen von Auswerferstiften bereits gängige Praxis ist. Alleine durch die Kontaktbereiche 64 bzw. die Vertiefungen 65 und deren besondere Anordnung in der durch Fig. 3 verdeutlichten Weise werden ein effektiver Abschleuderschutz und eine wirksame Orientierungshilfe zur Verfügung gestellt.

## Patentansprüche

1. Spannmittel (12) in Art eines Innenspannmittels zum Festlegen von Werkstücken, insbesondere zum Zwecke der Rotationsbearbeitung dieser Werkstücke, mit den folgenden Merkmalen:
a. das Spannmittel (12) verfügt über ein in Axialrichtung (2) erstrecktes Gehäuse (20), und
b. das Gehäuse (20) verfügt über einen sich zu einem distalen Ende verjüngenden Spannkegel (24), der in Axialrichtung (2) ausgerichtet ist, und
c. das Spannmittel (12) verfügt über einen Spannsegmentring (50) mit einer Mehrzahl von Spannsegmenten (60), die in Radialrichtung (4) gegeneinander beweglich sind, und
d. die Spannsegmente (60) weisen an ihrer Außenseite eine Spannfläche (62) zur Anlage am Werkstück auf, und
e. die Spannsegmente (60) weisen an ihrer Innenseite eine schräggestellte Gleitfläche (63) zur Anlage am Spannkegel auf, so dass die Spannsegmente (60) durch gemeinsame axiale Verlagerung gegenüber dem Spannkegel gegeneinander radial verlagerbar sind, und
f. das Spannmittel (12) verfügt über mindestens einen Auswerferstift (32), der in einer Durchbrechung (22) des Gehäuses (20) aufgenommen ist und in Axialrichtung (2) gegenüber dem Gehäuse (20) beweglich ist, um hierdurch den Spannsegmentring (50) mit einer Kraft zum Trennen vom Spannkegel (24) zu beaufschlagen, **gekennzeichnet durch** den zusätzlichen Merkmal:
g. an einer proximalen Stirnseite (60A) mindestens eines Spannsegments (60) ist ein Kontaktbereich (64) zur Aufnahme oder Anlage eines distalen Endes (32A) des Auswerferstiftes (32) vorgesehen, und
h. der Kontaktbereich (64) und das distale Ende (32A) des Auswerferstiftes (32) sind derart ausgebildet, dass bei Anordnung des distalen Endes (32A) des Auswerferstiftes (32) im Kontaktbereich (64) der Auswerferstift (32) in formschlüssiger Weise eine Beweglichkeit des Spannsegments in Radialrichtung (4) nach außen begrenzt.

2. Spannmittel (12) nach Anspruch 1 mit dem folgenden zusätzlichen Merkmal:
a. es ist eine Mehrzahl von Auswerferstiften (32) vorgesehen, die zur Aufnahme oder Anlage in Kontaktbereichen (64) mehrerer Spannsegmente (60) vorgesehen sind.

3. Spannmittel (12) nach Anspruch 1 mit dem folgenden zusätzlichen Merkmal:
a. jedem Spannsegment (60) ist mindestens ein eigener Auswerferstift (32) zugeordnet.

4. Spannmittel (12) nach einem der vorstehenden Ansprüche mit dem folgenden zusätzlichen Merkmal:
a. der Kontaktbereich (64) am Spannsegment (60) und das distale Ende (32A) des Auswerferstiftes (32) sind derart ausgebildet, dass bei Anordnung des distalen Endes (32A) des Auswerferstiftes (32) im Kontaktbereich (64) der Auswerferstift (32) in formschlüssiger Weise eine rotative Beweglichkeit des Spannsegments (60) gegenüber dem Spannkegel (24) begrenzt.

5. Spannmittel (12) nach Anspruch 4 mit dem folgenden zusätzlichen Merkmal:
a. der Kontaktbereich (64) am Spannsegment (60) wird durch eine in das Spannsegment (60) eingebrachte Vertiefung (65) gebildet.

6. Spannmittel (12) nach Anspruch 5 mit dem folgenden zusätzlichen Merkmal:
a. die Vertiefung (65) ist in Richtung der außenliegenden Spannfläche (62) offen ausgebildet.

7. Spannmittel (12) nach einem der vorstehenden Ansprüche mit dem folgenden zusätzlichen Merkmal:
a. der Spannkegel (24) weist eine Pyramidenstumpfform mit mindestens 3, vorzugsweise mit 6 gegeneinander angestellten Spannkegelsegmenten (26) auf, und
b. die Innenseiten der Spannsegmente (60) bilden gemeinsam im Querschnitt eine Polygonform mit geradlinigen Kanten (66), wobei die Kontaktbereiche (64) der Spannsegmente (60) in Radialrichtung (4) jeweils mit einem Mittelpunkt einer solchen Kante (66) fluchten.

8. Spannmittel (12) nach einem der vorstehenden Ansprüche mit den folgenden zusätzlichen Merkmalen:
a. an einer Mehrzahl von Spannsegmenten (60) ist jeweils mindestens ein Kontaktbereich (64) zur Aufnahme des distalen Endes (32A) jeweils eines Auswerferstiftes (32) vorgesehen, und
b. die Kontaktbereiche (64) sind zueinander in einer Art angeordnet, dass nur in einer Drehstellung des Spannsegmentrings (50) zum Spannkegel (24) ein Einrücken der distalen Enden (32A) der Auswerferstifte (32) möglich ist.

9. Spannmittel (12) nach einem der vorstehenden Ansprüche mit dem folgenden zusätzlichen Merkmal:
a. zur Kraftbeaufschlagung der Spannsegmente (60) ist ein Zugbolzen (34) vorgesehen, der in einem den Spannkegel (24) in Axialrichtung durchdringenden Zugbolzenkanal (28) geführt ist und der eine Anpressfläche (35) zur Kraftbeaufschlagung der Spannsegmente (60) in proximale Richtung (2A) aufweist,
insbesondere mit dem zusätzlichen Merkmal:
b. der Zugbolzen (34) und eine distale Stirnseite (50B) des Spannsegmentrings (50) sind miteinander zur radialformschlüssigen Sicherung der Spannsegmente (60) ausgebildet.

10. Spannmittel (12) nach einem der vorstehenden Ansprüche mit mindestens einem der folgenden zusätzlichen Merkmale:
a. der Spannsegmentring (50) weist insgesamt 2, 3, 4 oder 6 Spannsegmente (60) auf, und/oder
b. das Spannmittel (12) verfügt über eine axial verlagerbares Zugmittel (30), an der in Axialrichtung (2) ortsfest der Zugbolzen (34) und der mindestens eine Auswerferstift (32) angebracht sind, und/oder
c. der Spannsegmentring (50) weist elastische Verbindungselemente (54) zwischen den Spannsegmenten (60) auf und/oder
d. der Spannkegel weist die Form eines rotationssymmetrischen Kegelstumpfes auf.

## Claims

1. Clamping means (12) in the form of an internal clamping means for fixing workpieces, in particular for the purpose of rotary machining of the said workpieces, having the following steps:
a. the clamping means (12) has a housing (20) which extends in the axial direction (2), and
b. the housing (20) has a clamping cone (24) which tapers towards a distal end and is oriented in the axial direction (2), and
c. the clamping means (12) has a clamping segment ring (50) with a plurality of clamping segments (60) which can be moved with respect to one another in the radial direction (4), and,
d. on the outer side thereof, the clamping segments (60) have a clamping face (62) for bearing against the workpiece, and,
e. on the inner side thereof, the clamping segments (60) have an obliquely positioned sliding face (63) for bearing against the clamping cone, with the result that the clamping segments (60) can be moved radially with respect to one another by way of common axial movement with respect to the clamping cone, and
f. the clamping means (12) has at least one ejector pin (32) which is received in an aperture (22) of the housing (20) and can be moved in the axial direction (2) with respect to the housing (20), in order, as a result, to load the clamping segment ring (50) with a force for separation from the clamping cone (24), **characterized by** the additional feature:
g. a contact region (64) for receiving or bearing against a distal end (32A) of the ejector pin (32) is provided on a proximal end side (60A) of at least one clamping segment (60), and
h. the contact region (64) and the distal end (32A) of the ejector pin (32) are configured in such a way that, in the case of the arrangement of the distal end (32A) of the ejector pin (32) in the contact region (64), the ejector pin (32) delimits a movability of the clamping segment in the radial direction (4) to the outside in a positively locking way.

2. Clamping means (12) according to Claim 1, having the following additional feature:
a. a plurality of ejector pins (32) are provided which are provided for receiving in or bearing against contact regions (64) of a plurality of clamping segments (60).

3. Clamping means (12) according to Claim 1, having the following additional feature:
a. each clamping segment (60) is assigned at least one dedicated ejector pin (32).

4. Clamping means (12) according to one of the preceding claims, having the following additional feature:
a. the contact region (64) on the clamping segment (60) and the distal end (32A) of the ejector pin (32) are configured in such a way that, in the case of an arrangement of the distal end (32A) of the ejector pin (32) in the contact region (64), the ejector pin (32) limits a rotational movability of the clamping segment (60) with respect to the clamping cone (24) in a positively locking way.

5. Clamping means (12) according to Claim 4, having the following additional feature:
a. the contact region (64) on the clamping segment (60) is formed by way of a depression (65) which is made in the clamping segment (60).

6. Clamping means (12) according to Claim 5, having the following additional feature:
a. the depression (65) is of open configuration in the direction of the outer clamping face (62).

7. Clamping means (12) according to one of the preceding claims, having the following additional feature:
a. the clamping cone (24) has a truncated cone shape with at least 3, preferably with 6 clamping cone segments (26) which are set against one another, and
b. the inner sides of the clamping segments (60) form a polygonal shape with rectilinear edges (66) in cross section, the contact regions (64) of the clamping segments (60) being aligned in the radial direction (4) in each case with a centre point of an edge (66) of this type.

8. Clamping means (12) according to one of the preceding claims, having the following additional features:
a. in each case at least one contact region (64) for receiving the distal end (32A) of in each case one ejector pin (32) is provided on a plurality of clamping segments (60), and
b. the contact regions (64) are arranged with respect to one another in such a way that an engagement of the distal ends (32A) of the ejector pins (32) is possible only in one rotational position of the clamping segment ring (50) with respect to the clamping cone (24).

9. Clamping means (12) according to one of the preceding claims, having the following additional feature:
a. a tension bolt (34) is provided for loading the clamping segments (60) with a force, which tension bolt (34) is guided in a tension bolt channel (28) which penetrates the clamping cone (24) in the axial direction, and which tension bolt (34) has a pressing face (35) for loading the clamping segments (60) with force in the proximal direction (2A),
in particular having the additional feature:
b. the tension bolt (34) and a distal end side (50B) of the clamping segment ring (50) are configured with one another for securing the clamping segments (60) in a radially positively locking manner.

10. Clamping means (12) according to one of the preceding claims, having at least one of the following additional features:
a. the clamping segment ring (50) has a total of 2, 3, 4 or 6 clamping segments (60), and/or
b. the clamping means (12) has an axially movable tension means (30), to which the tension bolt (34) and the at least one ejector pin (32) are attached in a stationary manner in the axial direction (2), and/or
c. the clamping segment ring (50) has elastic connecting elements (54) between the clamping segments (60), and/or
d. the clamping cone has the shape of a rotationally symmetrical truncated cone.

## Revendications

1. Moyen de serrage (12) sous la forme d'un moyen de serrage intérieur destiné à caler des pièces à usiner, notamment à des fins d'usinage en rotation de ces pièces à usiner, ayant les caractéristiques suivantes :
a. le moyen de serrage (12) dispose d'un boîtier (20) allongé dans la direction axiale (2) et
b. le boîtier (20) dispose d'un cône de serrage (24) qui rétrécit vers une extrémité distale et qui est orienté dans la direction axiale (2), et
c. le moyen de serrage (12) dispose d'une bague segmentée de serrage (50) comprenant une pluralité de segments de serrage (60) qui sont mobiles les uns par rapport aux autres dans la direction radiale (4), et
d. les segments de serrage (60) possèdent sur leur côté extérieur une surface de serrage (62) destinée à être appliquée contre la pièce à usiner, et
e. les segments de serrage (60) possèdent sur leur côté intérieur une surface de glissement (63) en biais destinée à être appliquée contre le cône de serrage, de sorte que les segments de serrage (60) peuvent être positionnés dans le sens radial les uns contre les autres par un positionnement axial commun par rapport au cône de serrage, et
f. le moyen de serrage (12) dispose d'au moins une broche d'éjection (32) qui est accueillie dans une percée (22) du boîtier (20) et qui est mobile dans la direction axiale (2) par rapport au boîtier (20) afin de soumettre ainsi la bague segmentée de serrage (50) à une force en vue de la séparation du cône de serrage (24), **caractérisé par** la caractéristique supplémentaire :
g. une zone de contact (64) destinée à l'accueil ou à l'application d'une extrémité distale (32A) de la broche d'éjection (32) se trouve à un côté frontal proximal (60A) d'au moins un segment de serrage (60), et
h. la zone de contact (64) et l'extrémité distale (32A) de la broche d'éjection (32) sont configurées de telle sorte que lors de la disposition de l'extrémité distale (32A) de la broche d'éjection (32) dans la zone de contact (64), la broche d'éjection (32) limite, par complémentarité de formes, une mobilité du segment de serrage dans la direction radiale (4) vers l'extérieur.

2. Moyen de serrage (12) selon la revendication 1, ayant la caractéristique supplémentaire suivante :
a. une pluralité de broches d'éjection (32) sont présentes, lesquelles sont conçues pour être accueillies ou appliquées dans les zones de contact (64) de plusieurs segments de serrage (60).

3. Moyen de serrage (12) selon la revendication 1, ayant la caractéristique supplémentaire suivante :
a. au moins une broche d'éjection (32) propre est associée à chaque segment de serrage (60).

4. Moyen de serrage (12) selon l'une des revendications précédentes, ayant la caractéristique supplémentaire suivante :
a. la zone de contact (64) au niveau du segment de serrage (60) et l'extrémité distale (32A) de la broche d'éjection (32) sont configurées de telle sorte que lors de la disposition de l'extrémité distale (32A) de la broche d'éjection (32) dans la zone de contact (64), la broche d'éjection (32) limite, par complémentarité de formes, une mobilité en rotation du segment de serrage (60) par rapport au cône de serrage (24).

5. Moyen de serrage (12) selon la revendication 4, ayant la caractéristique supplémentaire suivante :
a. la zone de contact (64) au niveau du segment de serrage (60) est formée par une empreinte (65) ménagée dans le segment de serrage (60).

6. Moyen de serrage (12) selon la revendication 5, ayant la caractéristique supplémentaire suivante :
a. l'empreinte (65) est de configuration ouverte en direction de la surface de serrage (62) se trouvant à l'extérieur.

7. Moyen de serrage (12) selon l'une des revendications précédentes, ayant la caractéristique supplémentaire suivante :
a. le cône de serrage (24) possède une forme de pyramide tronquée avec au moins 3, de préférence 6 segments de cône de serrage (26) en contact les uns contre les autres, et
b. les côtés intérieurs des segments de serrage (60) forment ensemble, en section transversale, une forme polygonale avec des arêtes rectilignes (66), les zones de contact (64) des segments de serrage (60) étant respectivement à fleur d'un point central d'une telle arête (66) dans la direction radiale (4).

8. Moyen de serrage (12) selon l'une des revendications précédentes, ayant les caractéristiques supplémentaires suivantes :
a. au moins une zone de contact (64) destinée à accueillir l'extrémité distale (32A) respectivement d'une broche d'éjection (32) se trouve respectivement au niveau d'une pluralité de segments de serrage (60), et
b. les zones de contact (64) sont disposées les unes par rapport aux autres de telle sorte qu'une rentrée des extrémités distales (32A) de la broche d'éjection (32) n'est possible que dans une seule position de rotation de la bague segmentée de serrage (50) par rapport au cône de serrage (24).

9. Moyen de serrage (12) selon l'une des revendications précédentes, ayant la caractéristique supplémentaire suivante :
a. un boulon tirant (34) est présent pour appliquer une force aux segments de serrage (60), lequel est guidé dans un canal de boulon tirant (28) qui traverse le cône de serrage (24) dans la direction axiale et possède une surface de pressage (35) pour appliquer une force aux segments de serrage (60) dans la direction proximale (2A),
ayant notamment la caractéristique supplémentaire suivante :
b. le boulon tirant (34) et un côté frontal distal (50B) de la bague segmentée de serrage (50) sont configurés l'un avec l'autre pour le blocage des segments de serrage (60) par complémentarité de formes dans le sens radial.

10. Moyen de serrage (12) selon l'une des revendications précédentes, ayant au moins l'une des caractéristiques supplémentaires suivantes :
a. la bague segmentée de serrage (50) possède en tout 2, 3, 4 ou 6 segments de serrage (60), et/ou
b. le moyen de serrage (12) dispose d'un moyen de traction (30) positionnable dans le sens axial, au niveau duquel sont montés, en position fixe dans la direction axiale (2), le boulon de traction (34) et l'au moins une broche d'éjection (32), et/ou
c. la bague segmentée de serrage (50) possède des éléments de liaison élastiques (54) entre les segments de serrage (60) et/ou
d. le cône de serrage présente la forme d'un cône tronqué symétrique en rotation.
